(19) Europäisches Patentamt
European Patent Office
Office européen des brevets

(11) **EP 1 987 090 B1**

(12) **EUROPEAN PATENT SPECIFICATION**

(45) Date of publication and mention
of the grant of the patent:
**12.12.2012 Bulletin 2012/50**

(51) Int Cl.:
***C08K 3/22*** *(2006.01)*     ***C08K 9/04*** *(2006.01)*

(21) Application number: **07726473.7**

(22) Date of filing: **22.02.2007**

(86) International application number:
**PCT/EP2007/051715**

(87) International publication number:
**WO 2007/096408 (30.08.2007 Gazette 2007/35)**

(54) **FLAMEPROOF COMPOSITE MATERIAL**

FEUERSICHERER VERBUNDWERKSTOFF

MATERIAU COMPOSITE ANTIDEFLAGRANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.02.2006 EP 06110411**
**31.03.2006 US 787527 P**

(43) Date of publication of application:
**05.11.2008 Bulletin 2008/45**

(73) Proprietor: **Akzo Nobel N.V.**
**6824 BM Arnhem (NL)**

(72) Inventors:
• **VERLAAN, Johannes Petrus Jozef**
**NL-7415 DL Deventer (NL)**
• **DE JONG, Aaldert Johannes**
**NL-3781 XN Voorthuizen (NL)**

(74) Representative: **Schalkwijk, Pieter Cornelis**
**Akzo Nobel N.V.**
**Intellectual Property Department**
**P.O. Box 9300**
**6800 SB Arnhem (NL)**

(56) References cited:
**EP-A- 0 708 056**     **EP-A- 1 469 034**
**DE-A1- 19 836 580**     **US-A1- 2003 078 445**
**US-B1- 6 750 282**

• **DATABASE CA [Online] CHEMICAL ABSTRACTS SERVICE, COLUMBUS, OHIO, US; 5 March 2003 (2003-03-05), HAYASHI, MITSUO ET AL: "Vinyl chloride polymer composition containing low toxic fireproofing agent for gasket" XP002376441 retrieved from STN Database accession no. 2003: 167048 -& JP 2003 064234 A (HOSEI K. K., JAPAN) 5 March 2003 (2003-03-05)**

• **DATABASE WPI Section Ch, Week 198923 Derwent Publications Ltd., London, GB; Class A18, AN 1989-168400 XP002376471 -& JP 01 108235 A (HITACHI CABLE LTD) 25 April 1989 (1989-04-25)**

• **PATENT ABSTRACTS OF JAPAN vol. 005, no. 140 (C-070), 4 September 1981 (1981-09-04) -& JP 56 074137 A (KYOWA CHEM IND CO LTD), 19 June 1981 (1981-06-19)**

• **PATENT ABSTRACTS OF JAPAN vol. 2003, no. 05, 12 May 2003 (2003-05-12) -& JP 2003 026915 A (SEKISUI CHEM CO LTD), 29 January 2003 (2003-01-29)**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The Invention relates to composite material comprising a polymer, a metal hydroxide, and a clay.

In such composite materials the metal hydroxide generally serves as fire retardant. In the art the combination of such a flame retarding metal hydroxide and an organically modified cationic clay are disclosed.

US 6,750,282, for example, discloses the use of both a metal hydroxide selected from magnesium, calcium, zinc, and aluminium hydroxide or double hydroxide, and an organically intercalated layered silicate such as a smectite.

The use of orgenically modified anionic days like layered double hydroxides in polymer matrices is also known in the art. JP 2000-345057 and JP 2001-226522 describe an organically modified layered double hydroxide (LDH) which serves as flame retardant in polymer matrices.

None of the references describes or suggests that the use of the combination of an organically modified LDH and a metal hydroxide in polymer matrices leads to synergistically improved flame retardant properties of the resulting composite material.

It is an object of the present invention to provide a composite material, preferably a nanocompisite material, having improved flame retardant properties.

This object is achieved by a composite material comprising a polymer and

a) 0.1 to 30 wt% of a layered double hydroxide comprising a charge-balancing ion having at least carbon claims, and
b) 10 to 70 wt% of a metal hydroxide selected from magnesium hydroxide and aluminium hydroxide, based on the total weight of the composite material.

The composite material of the present invention has improved flame retardant properties. Upon burning, the composite material shows a reduction in dripping and a lowering of the peak of heat release rate. It exhibits an enhanced suppression of smoke in the event the composite material is on fire. Due to the presence of the organically modified layered double hydroxide in the given amount, a lower amount of the metal hydroxide can be used, and it enables a reduction of the total amount of inorganic material in the composite material; this in turn generally renders the composite material more easily producible, and it may result in improved mechanical properties.

In a preferred embodiment of the invention, the composite material is a nanocomposite material. In the context of the present application the term "nanocomposite material" or "nanocomposite" refers to a composite material wherein at least one component comprises an inorganic phase with at least one dimension in the 0.1 to 100 nanometer range. The nanocomposite material of the present invention comprises organically modified LDH which is at least partially delaminated or exfollated. Apart from the advantages already mentioned above for composite materials, the nanocomposite of the invention has the further advantage that it improves the flame retardant properties as well as the mechanical properties. The delaminated or exfoliated modified LDH may cause the formation of a char layer during degradation of the nanocomposite, which generally is a non-burning material and reduces the emission of flammable volatile products. The LDHs of the present invention are more thermally stable than the organically modified cationic clays.

In the context of the present application the term "charge-balancing organic ion" refers to anions that compensate for the electrostatic charge deficiencies of the crystalline LDH sheets. As the LDH typically has a layered structure, the charge-balancing ions may be situated in the interlayer, on the edge or on the outer surface of the stacked LDH layers. Such anions situated in the interlayer of stacked LDH layers are referred to as intercalating ions. LDHs treated with charge-balancing anions are rendered organophilic and are also referred to as "organoclays".

Such a stacked LDH or organoclay may also be delaminated or exfoliated, e.g. in a polymeric matrix. Within the context of the present specification the term "delamination" is defined as the reduction of the mean stacking degree of the LDH particles by at least partial de-layering of the LDH structure, thereby yielding a material containing significantly more individual LDH sheets per volume. The term "exfoliation" is defined as complete delamination, i.e. the disappearance of periodicity in the direction perpendicular to the LDH sheets, leading to a random dispersion of individual layers in a medium, thereby leaving no stacking order at all.

Swelling or expansion of the LDHs, also called intercalation of the LDHs, can be observed with X-ray diffraction (XRD), because the position of the basal reflections - i.e. the d($00l$) reflections - is indicative of the distance between the layers, which distance increases upon intercalation.

Reduction of the mean stacking degree can be observed as a broadening, up to disappearance, of the XRD reflections or by an increasing asymmetry of the basal reflections ($00l$).

Characterization of complete delamination, i.e. exfoliation, remains an analytical challenge, but may in general be concluded from the complete disappearance of non-($hk0$) reflections from the original LDH.

The ordering of the layers and, hence, the extent of delamination, can further be visualized with transmission electron microscopy (TEM).

The LDH of the invention may be any LDH known to the man skilled in the art. Typically, these LDHs are mineral LDHs which are able to expand or swell. Such LDHs have a layered structure comprising charged crystalline sheets (also referred to as individual LDH layers) with charge-balancing anions sandwiched in between. The terms "expand" and "swell" in the context of the present application refer to an increase in the distance between the charged crystalline sheets. Expandable LDHs can swell in suitable solvents, e.g. water, and can be further expanded and modified by exchanging the charge-balancing ions with other (organic) charge-balancing ions, which modification is also known in the art as Intercalation.

The modified layered double hydroxides, also referred to as LDHs, have a layered structure corresponding to the general formula:

$$\left[M_m^{2+}M_n^{3+}(OH)_{2m+2n}\right]X_{n/z}^{z-}\cdot bH_2O \tag{I}$$

wherein $M^{2+}$ is a divalent metal ion such as $Zn^{2+}$, $Mn^{2+}$, $Ni^{2+}$, $Co^{2+}$, $Fe^{2+}$, $Cu^{2+}$, $Sn^{2+}$, $Ba^{2+}$, $Ca^{2+}$, and $Mg^{2+}$, $M^{3+}$ is a trivalent metal ion such as $Al^{3+}$, $Cr^{3+}$, $Fe^{3+}$, $Co^{3+}$, $Mn^{3+}$, $Ni^{3+}$, $Ce^{3+}$, and $Ga^{3+}$, m and n have a value such that m/n = 1 to 10, and b has a value in the range of from 0 to 10. It is also contemplated to use three or more different metal ions in the layered double hydroxide prepared with the process of the invention. Of these metal ions the combination of $Mg^{2+}$ and/or $Zn^{2+}$ and $Al^{3+}$ is preferred.

X is a charge-balancing organic anion having at least two carbon atoms, or any other anion known to the man skilled in the art, as long as at least part of the intercalating ions is constituted by the organic anion having at least two carbon atoms.

The LDH of the invention includes hydrotalcite and hydrotalcite-like anionic LDHs. Examples of such LDHs are hydrotalcite and hydrotalcite-like materials, meixnerite, manasseite, pyroaurite, sjögrenite, stichtite, barberonite, takovite, reevesite, and desautelsite. A preferred LDH is hydrotalcite, which is an LDH having a layered structure corresponding to the general formula:

$$\left[Mg_m^{2+}Al_n^{3+}(OH)_{2m+2n}\right]X_{n/z}^{z-}\cdot bH_2O \tag{II}$$

wherein m and n have a value such that m/n = 1 to 10, preferably 1 to 6, and b has a value in the range of from 0 to 10, generally a value of 2 to 6, and often a value of about 4. X is a charge-balancing ion as defined above. It Is preferred that m/n should have a value of 2 to 4.

The LDH may be in any crystal form known in the art, such as described by Cavani et al. (Catalysis Today, 11 (1991), pp. 173-301) or by Bookin et al. (LDHs and LDH Minerals, (1993), Vol. 41(5), pp. 558-564). If the LDH is a hydrotalcite, the hydrotalcite may be a polytype having $3H_1$, $3H_2$, $3R_1$ or $3R_2$ stacking, for example.

The charge-balancing organic ion in accordance with the invention may be any organic anion known in the art having at least two carbon atoms including mono-, di- or polycarboxylic acids, sulfonic acids, phosphonic acids, and sulfate acids. Preferably, the organic anion comprises at least 6 carbon atoms, and most preferably at least 8 carbon atoms. It is further contemplated that the charge-balancing organic anion comprises one or more functional groups such as hydroxyl, amine, carboxylic acid, and vinyl. These functional groups may interact or react with the polymer used in the nanocomposite material of the invention.

Suitable examples of organic anions of the invention are monocarboxylic acids such as fatty acids and rosin-based ions.

In one embodiment, the organic anion is a fatty acid having from 8 to 22 carbon atoms. Such a fatty acid may be a saturated or unsaturated fatty acid. Suitable examples of such fatty acids are caprylic acid, capric acid, lauric acid, myristic acid, palmitic acid, stearic acid, arachidic add, decenoic acid, palmitoleic acid, oleic acid, linoteic acid, linolenic acid, and mixtures thereof.

In another embodiment of the invention, the organic anion is rosin. Rosin is derived from natural sources, is readily available, and is relatively cheap compared to synthetic organic anions. Typical examples of natural sources of rosin are gum rosin, wood rosin, and tall oil rosins. Rosin commonly is a mixture of a wide variety of different isomers of monocarboxylic tricyclic rosin acids usually containing about 20 carbon atoms. The tricyclic structures of the various rosin acids differ mainly in the position of the double bonds. Typically, rosin is a mixture of substances comprising levopimaric acid, neoabietic acid, palustric acid, abietic acid, dehydroabietic acid, seco-dehydroabietic acid, tetra-hydroabietic acid, dihydroabietic acid, pimaric acid, and isopimaric acid. Rosin derived from natural sources also includes rosins, i.e. rosin mixtures, modified notably by polymerization, isomerization, disproportion, hydrogenation, and Diels-Alder reactions with acrylic acid, anhydrides, and acrylic acid esters. The products obtained by these processes are referred to as modified rosins. Natural rosin may also be chemically altered by any process known in the art, such as for example reaction of the carboxyl group on the rosin with metal oxides, metal hydroxides or salts to form rosin soaps or salts (so-called resinates). Such chemically altered rosins are referred to as rosin derivatives. Such rosin can be modified or chemically altered by introducing an organic group, an anionic group or a cationic group. The organic group, may be a substituted or unsubstituted aliphatic or aromatic hydrocarbon having 1 to 40 carbon atoms. The anionic group may be any anionic group known to the man skilled in the art, such as a carboxylate or a sulfonate.

Further details of these rosin-based materials can be gleaned from D.F. Zinkel and J. Russell (in Naval. Stores, production-chemistry-utilization, 1989, New York, Section II, Chapter 9), and J.B. Class ("Resins, Natural," Chapter 1: "Rosin and Modified Rosins," Kirk-Othmer Encyclopedia of Chemical Technology, online posting date: December 4, 2000).

It is also contemplated to use LDHs of the invention comprising one or more organic anions. In one embodiment, the intercalating anions are a mixture of fatty acid and rosin.

In one embodiment, at least 10% of the total amount of intercalating ions in the LDH types according to the invention are organic anions, preferably at least 30%, more preferably at least 60%, even more preferably at least 70%, and most preferably at least 90% of the total amount of intercalating ions are organic anions. In a preferred embodiment, at least 10% of the total amount of intercalating anions are fatty acid-derived or rosin-based anions or a mixture of both anions, preferably at least 30%, more preferably at least 60%, even more preferably at least 70%, and most preferably at least 90% of the total amount of intercalating ions are fatty acid-derived or rosin-based anions or a mixture of both anions.

The distance between the Individual LDH layers In an LDH-based organoclay generally is larger than the distance between the layers of a conventional LDH not containing organic anions in accordance with the invention, e, g. carbonate ions. Preferably, the distance between the layers In an LDH according to the invention Is at least 1.0 nm, more preferably at least 1.5 nm, and most preferably at least 2 nm. The distance between the individual layers can be determined using X-ray diffraction, as outlined before.

The amount of organically modified LDH In the composite material genarally is between 0.1 and 30 wt%, based on the total weight of the composite material. Preferably, the amount of LDH is between 0.2 and 26 Wt%, most preferably between 0.6 and 20 wt%.

The metal hydroxide of the present invention is known in the art and generally serves as a flame retardant agent. The metal metal hydroxides are magnesium hydroxide such as brucite, and aluminium hydroxide such as aluminium trihydroxide .

The amount of metal hydroxide in the composite material generally is between 10 and 70 wt%, based on the total weight of the composite material. Preferably, the amount of metal hydroxide is between 15 and 60 wt%, most preferably between 18 and 40 wt%.

The weight ratio of the organically modified LDH to the metal hydroxide generally is between 100:1 and 1:100, preferably between 70:1 and 1:70, more preferably 50:1 and 1:50, and most preferably between 35:1 and 1:35.

The metal hydroxides have a specific surface area and an average particle size such as conventionally used In composite or nanocomposite materials. Generally, the metal hydroxides have a specific surface area of from 3 to 150 $m^2$/g and an average particle size of between 0.1 and 20 $\mu$m. Preferably, the specific surface area is between 5 and 100 $m^2$/g, most preferably between 10 and 50 $m^2$/g, and the average particle size is between 1 and 15 $\mu$m, most preferably between 2 and 10 $\mu$m.

The present invention also pertains to a combination of an LDH in accordance with the invention and a metal hydroxide. This combination can be a physical mixture or a kit of parts.

In one embodiment of the invention, the combination comprises

a) 1 to 80 wt% of a layered double hydroxide comprising an inorganic charge-balancing anion, the inorganic charge-balancing anion preferably being carbonate or hydroxide and/or an organically modified layered double hydroxide comprising a charge-balancing organic ion having at least 2 carbon atoms, and
b) 20 to 99 wt% of a metal hydroxide, based on the total weight of the combination.

Preferably, the combination comprises 5 to 70 wt% of the layered double hydroxide(s) and 30 to 95 wt% of the metal hydroxide, based on the total weight of the combination, and most preferably, the combination comprises from 10 to 60 wt% of the layered double hydroxide(s) and 40 to 90 wt% of the metal hydroxide.

Physical mixtures can be prepared by physically mixing the separate ingredients. Alternatively, these mixtures can be prepared in a one-pot synthesis. The LDHs of the invention can be prepared according to processes known in the art. The invention provides a process for preparing a mixture of a layered double hydroxide comprising a charge-balancing anion and a metal hydroxide, the process comprising the steps of:

(a) preparing a precursor suspension or solution comprising a divalent metal ion source, a trivalent metal ion source, water, and/or a solvent, the solvent preferably being miscible with water, and optionally a precursor of the charge-balancing anion;
(b) treating the precursor suspension or solution to obtain the layered double hydroxide; and
(c) adding further divalent or trivalent metal ion source to the suspension and treating the suspension to obtain the metal hydroxide;

(d) optionally, isolating the resulting mixture in solid form.

The conditions of the process, the types of metal ion sources (e.g. salt and/or solid), the solvent as well as the precursor of the charge-balancing anion determine which LDH and metal hydroxide are prepared. Depending on the desired combination, the person skilled in the art will understand how the process is to be conducted.

The polymer that can be suitably used in the nanocomposite material of the invention can be any polymer matrix known in the art. In this specification, the term "polymer" refers to an organic substance of at least two building blocks (i.e. monomers), thus including oligomers, copolymers, and polymeric resins. Suitable polymers for use in the polymer matrix are both poly-adducts and polycondensates. The polymers may further be homopolymers or copolymers. Preferably, the polymeric matrix has a degree of polymerization of at least 20, more preferably of at least 50. In this connection, for a definition of the degree of polymerization, reference is made to P.J. Flory, Principles of Polymer Chemistry, New York, 1953.

Examples of suitable polymers are polyolefins, such as polyethylene or polypropylene, vinyl polymers, such as polystyrene, polymethyl methacrylate, polyvinyl chloride, polyvinylidene chloride or polyvinylidene fluoride, saturated polyesters, such as polyethylene terephthalate, polylactic acid, or poly($\varepsilon$-caprolactone), unsaturated polyester resins, acrylate resins, methacrylate resins, polyimides, epoxy resins, fenol formaldehyde resins, urea formaldehyde resins, melamine formaldehyde resins, polyurethanes, polycarbonates, polyaryl ethers, polysulfones, polysulfides, polyamides, polyether imides, polyether esters, polyether ketones, polyether ester ketones, polysiloxanes, polyurethanes, polyepoxides, and blends of two or more polymers. Preferably used are polyolefins, vinyl polymers, polyesters, polycarbonates, polyamides, polyurethanes or polyepoxides.

The organoclay according to the invention is particularly suitable for use in thermoplastic polymers such as polyethylene, polypropylene, polystyrene and acetal (co)polymers such as polyoxymethylene (POM), and in rubbers such as natural rubber (NR), styrene-butadiene rubber (SBR), polyisoprene (IR), polybutadiene (BR), polyisobutylene (IIR), halogenated polyisobutylene, butadiene nitrile rubber (NBR), hydrogenated butadiene nitrile rubber (HNBR), styrene-isoprene-styrene (SIS) and similar styrenic block copolymers, poly(epichlorohydrin) rubbers (CO, ECO, GPO), silicon rubbers (Q), chloroprene rubber (CR), ethylene propylene rubber (EPM), ethylene propylene diene rubber (EPDM), polysulfide rubber (T), fluorine rubbers (FKM), ethylene-vinyl acetate rubber (EVA), polyacrylic rubbers (ACM), polynorbomene (PNR), polyurethanes (AU/EU), and polyester/ether thermoplastic elastomers.

Particularly preferred are polymers or copolymers obtainable by polymerization of at least one ethylenically unsaturated monomer. Examples of such polymers are polyolefins and modified polyolefins, which are known to the man skilled in the art. The polyolefin or modified polyolefin can be a homopolymer or a copolymer. Suitable examples of such (modified) polyolefins are polyethylene, polypropylene, polybutylene, polystyrene, polyvinyl chloride, polyvinylidene chloride, and ethylene-propylene rubber, propylene-butylene copolymer, ethylene-vinyl chloride copolymer, ethylene-vinyl acetate copolymer, acrylonitrile-butadiene-styrene copolymer (ABS), acrylonitrile-acrylate-styrene copolymer (AAS), methyl methacrylate-butadiene-styrene copolymer (MBS), chlorinated polyethylene, chlorinated polypropylene, ethylene-acrylate copolymer, vinyl chloride-propylene copolymer, and mixtures thereof. It is also envisaged to use a particular class of polypropylenes in the composite or nanocomposite material of the invention, viz. the so-called thermoplastic polyolefins (TPOs), which include blends or reactor grades of polypropylene and EPR rubber.

Specific examples of polyethylene are high-density polyethylene, low-density polyethylene, straight chain low-density polyethylene, ultra-low-density polyethylene, and ultra-high-molecular weight polyethylene. Examples of ethylene-based copolymers are ethylene-vinyl acetate copolymer (EVA), ethylene-ethyl acrylate copolymer (EEA), ethylene-methyl acrylate copolymer (EMA), and ethylene-acrylic acid copolymer (EAA).

The composite material or nanocomposite material of the invention may further comprise additives commonly used in the art. Examples of such additives are pigments, dyes, UV-stabilizers, heat-stabilizers, anti-oxidants, fillers (such as hydroxyapatite, silica, silane coupling agents, compatibilizers, oil, waxes, carbon black, glass fibres, and other inorganic materials), processing aids (such as calcium stearate), nucleating agents, impact modifiers, plasticizers, rheology modifiers, cross-linking agents, and degassing agents.

These optional addenda and their corresponding amounts can be chosen according to need.

In one embodiment of the invention, an organically modified cationic clay is added to the composite or nanocomposite material of the present invention. Cationic clays are clays that have cationic charge-balancing ions. Examples of cationic clays are kaolins, serpentines, illites, vermiculites, and smectites. The preferred cationic clay type is smectite, such as is selected from the group consisting of montmorillonite, beidellite, nontronite, hectorite, saponite, and sauconite. These smectites, and processes for their preparation, are described in US 4,695,402, US 3,855,147, US 3,852,405, US 3,844,979, US 3,844,978, US 3,671,190, US 3,666,407, US 3,586,478, and US 3,252,757. Preferred smectites are montmorillonite, hectorite, and saponite. The most preferred smectite is montmorillonite.

The cationic charge-balancing organic ion may be any organic cation known in the art. Preferably, the organic cation is a hydrocarbon comprising a quaternary ammonium group such as those described in EP 0 780 340.

The amount of clay, in particular organically modified clay, in the composite or nanocomposite material generally is between 0.1 and 30 wt%, based on the total weight of the composite or nanocomposite material. Preferably, the amount of (organically modified) cationic clay is between 0.2 and 25 wt%, most preferably between 0.5 and 20 wt%.

The weight ratio of LDH, and in particular of organically modified LDH, to cationic clay generally is between 100:1 and 1:100, preferably between 50:1 and 1:50, most preferably between 10:1 and 1:10.

It is also contemplated to use other conventional flame retardant agents in the composite or nanocomposite material of the invention. Suitable examples are antimony oxide, red phosphorous, zinc sulfide, melamine derivatives, organophosphorous compounds and/or inorganic boron compounds. These agents can be used in the same amounts as disclosed for the organically modified cationic clays.

The invention further pertains to masterbatches, i.e. highly concentrated additive premixes, comprising modified LDH amounts of 10-70 wt% and 30-90 wt% of the polymer, based on the total weight of the masterbatch. The modified LDH can be an LDH modified with inorganic charge-balancing anions or organic charge-balancing anions. Such a masterbatch can be advantageously used for the preparation of the composite or nanocomposite materials of the present invention. These masterbatches may comprise modified LDHs of the invention that are delaminated or exfoliated.

However, if the LDH in such masterbatches is not completely delaminated, further delamination may be reached at a later stage, if so desired, when blending the masterbatch with a (further) polymer to obtain true polymer-based nanocomposites.

The composite and nanocomposite materials of the present invention can be prepared according to any method known to a person skilled in the art. A skilled person may intimately mix a polymeric matrix and the LDH according to the invention by using melt-blending techniques, for instance. This method is preferred, as it is simple, cost-efficient, and readily applicable in existing plants. It is also envisaged to prepare the LDH of the invention in the presence of the polymeric matrix, or in the presence of the monomers and/or oligomers before, during or after the monomers and/or oligomers are polymerized to form the polymeric matrix.

In one embodiment of the process of the invention, the modified LDH or the masterbatch is added to the polymer, while the polymer is kept at a temperature at which it is fluid. Alternatively, the modified LDH or the masterbatch in solid form is added to or mixed with the solid first or second polymer before the mixture is heated to a temperature at which the polymer is fluid. If the polymer is crystalline, this temperature generally is above the melting temperature of the crystalline polymer, and if the polymer has a glass transition temperature, the temperature should be above the glass transition temperature of the polymer. In this way, it is ensured that the LDH or the masterbatch is easily mixed in the polymer, enabling a uniform distribution of nanometer-sized LDH particles throughout the polymer within an even shorter time, rendering the process more attractive economically. The mixing and/or compounding steps can be performed in a batch process, e.g. in a Banbury mixer, or in a two-roll mill (suitable for rubbers), or in a continuous mode, e.g. in tube reactors, extruders such as (co-rotating) twin- or single-screw extruders or a Buss-kneader (reciprocating single screw extruder), and plow mixers.

The composite or nanocomposite material of the present invention can be used in any application where these composite materials are conventionally used.

If the polymer in the nanocomposite is a (co)polymer obtainable by the polymerization of at least one ethylenically unsaturated monomer, the nanocomposite material can be suitably used in carpeting, automobile parts, fibres, container closures, building products, lunch boxes, closures, medical devices, household articles, food containers, dishwashers, outdoor furniture, blow moulded bottles, disposable non-woven fabrics, cables and wires, and packaging.

In one embodiment of the invention, the polymer of the (nano)composite material comprises polypropylene. Further details for polypropylene can be found in "Polypropylene", Chapter 5: "Uses", by R.B. Lieberman in Kirk-Othmer Encyclopedia of Chemical Technology, online posting date December 4, 2000, and in brochure 022 PPe 10/01 of Basell entitled "Polypropylene: Textile, Rigid Packaging, Consumer, Film, Automotive, Electrical/Electronics and Home Appliances".

If the nanocomposite material comprises rubber, these nanocomposite materials can be suitably applied in tyre manufacture such as in car tyres, truck tyres, off-the-road tyres, and aircraft tyres, in latex products including gloves, condoms, balloons, catheters, latex thread, foam, carpet backings, and rubberized coir and hair, in footwear, in civil engineering products such as bridge bearings, rubber-metal-laminated bearings, in belting and hoses, in non-tyre automotive applications including engine mounts, rubber bearings, seals, grommets, washers and boots, in wires and cables, and in pipe seals, medical closures, rollers, small solid tyres, mountings for domestic and commercial appliances, rubber balls and tubing, milking inflations and other agricultural-based applications.

In a preferred embodiment, the composite or nanocomposite material of the invention is used in cables and wires. Suitable polymers commonly used in such cables and wires are ethylene-vinyl acetate (co)polymer (EVA), low-density polyethylene (LDPE), chlorinated polyethylene (CPE), polyvinyl chloride (PVC), ethylene propylene rubber (EPM), ethylene propylene diene rubber (EPDM).

The present invention is further illustrated in the Examples below.

EXAMPLES

Examples 1-4 and Comparative Examples A and B

All composite materials were prepared by combining all the ingredients in a Haake Rheomix 600 mixing chamber equipped with roller rotors. The mixture was mixed at 200°C at a rotation speed of 50 rpm. After 15 minutes the composite materials were cooled and subsequently formed into 2- and 3-mm sheets by compression moulding between steel plates at 180°C.

The resulting 2-mm sheets were cut into strips. These strips were tested according to the Vertical Burning Test UL-94 for classifying materials 94V-0, 94V-1, or 94V-2, in accordance with ASTM D3801.

The 3-mm sheets were analyzed using an oxygen consumption calorimeter in accordance with ASTM E 1354-04a (Cone calorimeter).

The following ingredients were used in the preparation of the above composite materials:

| | |
|---|---|
| PP | Moplen HP500N: a polypropylene ex Basell |
| MgOH | Magshield UF: a magnesium hydroxide ex Martin Marietta Magnesia Specialties |
| Perkalite F100 | an LDH modified with tallow acid ex Akzo Nobel Cemicals |
| Perkalite P100S | an LDH modified with tallow acid ex Akzo Nobel Chemicals |

The amounts of the ingredients used in the composite materials of Comparative Examples A and B and Examples 1 to 4 are summarized in Table 1. In addition, Table 1 shows the results of the UL 94 test for each of the Examples.

Table 1

| Example | A | 1 | 2 | B | 3 | 4 |
|---|---|---|---|---|---|---|
| PP | 35 | 35 | 35 | 40 | 40 | 40 |
| MgOH | 65 | 60 | 60 | 60 | 58 | 58 |
| Perkalite F100 | | 5 | | | 2 | |
| Perkalite P100S | | | 5 | | | 2 |
| UL94 rating | No rating | V1 | V0 | No rating | V2 | V2 |

The above Table clearly demonstrates that composite materials comprising organically modified LDHs in accordance with the invention have better ratings in the UL 94 test.

In Table 2, the cone calorimetry results are shown for the same composite materials.

Table 2

| Example | A | 1 | 2 | B | 3 | 4 |
|---|---|---|---|---|---|---|
| Time to ignition (sec) | 85 | 77 | 82 | 87 | 78 | 86 |
| PHRR (kW/m$^2$) | 191 | 180 | 201 | 218 | 162 | 177 |
| Difference in PHRR | Reference | -9% | +5% | reference | -35% | -23% |
| RSR ((m$^2$/s)/m$^2$) | 1.3 | 0.5 | 0.7 | 1.5 | 0.6 | 0.6 |
| PHRR = Peak Heat Release Rate RSR = Rate of Smoke Release | | | | | | |

The cone calorimetry results reveal a lower peak heat release for the Examples according to the invention, as well as a lower smoke release compared to the Comparative Examples.

**Claims**

1. A composite material comprising a polymer and

    a) 0.1 to 30 wt% of a layered double hydroxide having the formula

$$\left[M^{2+}_m M^{3+}_n (OH)_{2m+2n}\right] X^{z-}_{n/z} \cdot bH_2O$$

wherein $M^{2+}$ is a divalent metal ion, $M^{3+}$ is a trivalent metal ion, m and n have a value such that m/n = 1 to 10, b has a value in the range of from 0 to 10, and $X^{z-}$ is a charge-balancing anion at least part of which is an organic anion having at least two carbon atoms,
, and
b) 10 to 70 wt% of a metal hydroxide selected from magnesium hydroxide and aluminium hydroxide, based on the total weight of the composite material.

2. Composite material according to claim 1 wherein the composite material is a nanocomposite material, i.e. a composite material wherein at least one component comprises an inorganic phase with at least one dimension in the 0.1 to 100 nanometer range.

3. Composite material according to claim 1 or 2 wherein the distance between the layers in the organically modified layered double hydroxide is at least 1.0 nm.

4. Composite material according to any one of the preceding claims wherein the organically modified layered double hydroxide comprises at least one charge-balancing organic ion selected from the group consisting of monocarboxylic acids and rosin.

5. Composite material according to any one of the preceding claims wherein the metal hydroxide is aluminium trihydroxide.

6. Composite material according to any one of the preceding claims further comprising an organically modified cationic clay, preferably an organically modified smectite.


**Patentansprüche**

1. Ein Verbundwerkstoff, umfassend ein Polymer und

   a) 0,1 bis 30 Gew.-% eines geschichteten Doppelhydroxids mit der Formel

$$[M^{2+}_m M^{3+}_n (OH)_{2m+2n}] X^{z-}_{n/z} \cdot bH_2O$$

   wobei $M^{2+}$ ein zweiwertiges Metallion ist, $M^{3+}$ ein dreiwertiges Metallion ist, m und n einen Wert aufweisen, so dass m/n = 1 bis 10 ist, b einen Wert im Bereich von 0 bis 10 aufweist, und $X^{z-}$ ein ladungsausgleichendes Anion ist, von dem mindestens ein Teil ein organischen Anion mit mindestens zwei Kohlenstoffatomen ist, und
   b) 10 bis 70 Gew.-% eines Metallhydroxids, ausgewählt aus Magnesiumhydroxid und Aluminiumhydroxid, bezogen auf das Gesamtgewicht des Verbundwerkstoffs.

2. Verbundwerkstoff gemäß Anspruch 1, wobei der Verbundwerkstoff ein Nanoverbundwerkstoff ist, dass heißt ein Verbundwerkstoff, in dem mindestens eine Komponente eine anorganische Phase mit mindestens einer Dimension im 0,1 bis 100 Nanometerbereich umfasst.

3. Verbundwerkstoff gemäß Anspruch 1 oder 2, wobei der Abstand zwischen den Schichten in dem organisch modifizierten, geschichteten Doppelhydroxid mindestens 1,0 nm beträgt.

4. Verbundwerkstoff gemäß einem der vorherigen Ansprüche, wobei das organisch modifizierte, geschichtete Doppelhydroxid mindestens ein ladungsausgleichendes organisches Ion, ausgewählt aus der Gruppe bestehend aus Monocarbonsäuren und Kolophonium, umfasst.

5. Verbundwerkstoff gemäß einem der vorherigen Ansprüche, wobei das Metallhydroxid Aluminiumtrihydroxid ist.

6. Verbundwerkstoff gemäß einem der vorherigen Ansprüche, das ferner einen organisch modifizierten, kationischen Ton, bevorzugt einen organisch modifizierten Smektit umfasst.

**Revendications**

1. Matériau composite comprenant un polymère et

a) de 0,1 à 30 % en poids d'hydroxyde double lamellaire ayant la formule suivante

$$[M^{2+}_m M^{3+}_n (OH)_{2m+2n}] X^{z-}_{n/z} \cdot b H_2 O$$

dans laquelle $M^{2+}$ est un ion métallique divalent, $M^{3+}$ est un ion métallique trivalent, m et n ont une valeur telle que m/n = 1 à 10, b a une valeur dans la plage de 0 à 10 et $X^{z-}$ est un anion à équilibrage de charge dont au moins une partie est un anion organique ayant au moins deux atomes de carbone.
b) de 10 à 70 % en poids d'un hydroxyde métallique choisi parmi l'hydroxyde de magnésium et l'hydroxyde d'aluminium, sur la base du poids total du matériau composite.

2. Matériau composite selon la revendication 1, le matériau composite étant un matériau nanocomposite, c'est-à-dire un matériau composite dans lequel au moins un composant comprend une phase inorganique avec au moins une dimension dans la plage nanométrique de 0,1 à 100.

3. Matériau composite selon la revendication 1 ou 2, dans lequel la distance entre les couches de l'hydroxyde double lamellaire organiquement modifié est d'au moins 1,0 nm.

4. Matériau composite selon l'une quelconque des revendications précédentes, dans lequel l'hydroxyde double lamellaire organiquement modifié comprend au moins un ion organique à équilibrage de charge choisi dans le groupe constitué des acides monocarboxyliques et de la colophane.

5. Matériau composite selon l'une quelconque des revendications précédentes, dans lequel l'hydroxyde métallique est du trihydroxyde d'aluminium.

6. Matériau composite selon l'une quelconque des revendications précédentes, comprenant en outre une argile cationique organiquement modifiée, de préférence une smectite organiquement modifiée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6750282 B
- JP 2000345057 A
- JP 2001226522 A
- US 4695402 A
- US 3855147 A
- US 3852405 A
- US 3844979 A
- US 3844978 A
- US 3671190 A
- US 3666407 A
- US 3586478 A
- US 3252757 A
- EP 0780340 A

### Non-patent literature cited in the description

- **CAVANI et al.** *Catalysis Today,* 1991, vol. 11, 173-301
- **BOOKIN et al.** *LDHs and LDH Minerals,* 1993, vol. 41 (5), 558-564
- **D.F. ZINKEL ; J. RUSSELL.** Naval. Stores, production-chemistry-utilization. 1989
- Resins, Natural,'' Chapter 1: ''Rosin and Modified Rosins. **J.B. CLASS.** Kirk-Othmer Encyclopedia of Chemical Technology. 04 December 2000
- **P.J. FLORY.** *Principles of Polymer Chemistry,* 1953
- Polypropylene. **R.B. LIEBERMAN.** Kirk-Othmer Encyclopedia of Chemical Technology. 04 December 2000